# EUROPÄISCHE PATENTSCHRIFT

(11) **EP 1 997 717 B1**
(45) Veröffentlichungstag und Bekanntmachung des Hinweises auf die Patenterteilung: **10.03.2010**
(21) Anmeldenummer: 08004909.1
(22) Anmeldetag: 17.03.2008
(51) Int. Cl.: B62D 21/20, B62D 53/06

(54) **Aus Kröpfungssegment und Achssegment bestehender Langträger für das Chassis eines Sattelaufliegers**
Longitudinal beam with offset section and axle support section for the chassis of a semi-trailer
Longeron avec section décalée et section de support d'essieu pour le châssis d'un semi-remorque

(30) Priorität: 29.05.2007 DE 102007025041
(43) Veröffentlichungstag der Anmeldung: 03.12.2008
(73) Patentinhaber: Schmitz Cargobull AG, 48341 Altenberge (DE)
(72) Erfinder: Kötter, Jürgen, 49545 Tecklenburg (DE); Rathmann, Norbert, 48356 Nordwalde (DE); Zimmermann, Stefan, 44532 Lünen (DE)
(74) Vertreter: Simons, Johannes

(56) Entgegenhaltungen:
- EP-A- 1 245 476
- WO-A-02/092414
- DE-U1- 9 215 300

## Beschreibung

Die Erfindung betrifft einen aus wenigstens zwei Segmenten, nämlich vorderem Kröpfungssegment und hinterem Achssegment, bestehenden Langträger für das Chassis eines Sattelaufliegers, bei dem das Kröpfungssegment, das an seiner Unterkante eine Kröpfungskontur aufweist, die Sattelkupplung trägt, und das rückwärtige Achssegment die Basis für die Hinterachsanordnung bildet, wobei die Segmente durch Blechumformung in Form von Trägern hergestellt sind, die aus einem vertikalen Steg und wenigstens einem am Ende des jeweiligen Stegs kragenden Gurt bestehen, und in einem Verbindungsbereich miteinander verbunden sind.

Ein solcher Langträger ist beispielsweise bekannt aus DE 92 15 300 U1. Das Dokument beschreibt ein Kröpfungssegment, das mit dem Achssegment über ein Zwischenstück, das einen lotrechten Bereich bildet, verbunden ist. Nachteilig hierbei ist, dass zusätzliche Montagestellen zwischen dem Zwischenstück und den Segmenten erforderlich sind, dass sich zahlreiche Schweißstellen ergeben und dass ein Materialwechsel aufgrund anderer Anforderungen an Festigkeit, Abmessung und Materialeigenschaften nur sehr schwer möglich ist.

Es stellt sich daher die Aufgabe, die Nachteile des Standes der Technik zu vermeiden und einen Langträger anzugeben, bei dem Schweißarbeiten weitgehend vermieden werden, bei dem die oben genannten Parameter leicht verändert werden können und bei dem ein modulartiger Zusammenbau möglich ist.

Diese Aufgabe wird gelöst bei einer ersten Variante eines gattungsbildenden Langträgers für das Chassis eines Sattelaufliegers, der dadurch gekennzeichnet ist, dass das Kröpfungssegment zwei Kröpfungssegmentlamellen umfasst, die jeweils einen Trägerteilssteg und wenigstens je einen von jedem der Trägerteilstege abkragenden Gurtteil aufweisen, dass wenigstens eine der Kröpfungssegmentlamellen an ihrer Unterkante die erforderliche Kröpfungskontur aufweist, und dass im Verbindungsbereich V ein Überlappungsbereich in Bezug auf die vertikalen Trägerteilstege der Kröpfungssegmentlamellen und des Steges des hinteren Achssegmentes gebildet ist, in denen die Stege aneinander liegen und über Bolzenfügungen miteinander verbunden sind.

Bei einer zweiten Variante des gattungsbildenden Langträgers ist dieser dadurch gekennzeichnet, dass das Kröpfungssegment zwei Kröpfungssegmentlamellen umfasst, die jeweils einen Trägerteilssteg und wenigstens je einen von jedem der Trägerteilstege abkragenden Gurtteil aufweisen, dass wenigstens eine der Kröpfungssegmentlamellen an ihrer Unterkante die erforderliche Kröpfungskontur aufweist, dass im Verbindungsbereich der vertikale Trägerteilsteg wenigstens einer der Kröpfungssegmentlamellen und der Steg des hinteren Achssegmentes durch eine Stoßfuge getrennt sind, dass eine Verbindungslasche über die Stoßfuge reicht und dass über Bolzenfügungen die Verbindungslasche sowohl mit den Trägerteilstegen der Kröpfungssegmentlamellen als auch mit dem Steg des Achssegmentes verbunden ist.

Ähnlich wie bei der vorstehenden zweiten Variante kann bei der ersten Variante zusätzlich noch eine Verbindungslasche vorgesehen werden, die die Segmentverbindung im Verbindungsbereich verstärkt.

Vorzugsweise weisen beide Kröpfungssegmentlamellen an ihrer Unterkante die gleiche Kröpfungskontur auf. Beide Kröpfungssegmente werden vorzugsweise ohne Unterbrechung bis an die Spitze des Chassis geführt; es soll aber nicht ausgeschlossen werden, dass die Kröpfungssegmente auf ihrer Länge unterteilt sind.

Es sind zahlreiche Möglichkeiten gegeben, die Kröpfungssegmentlamellen dazu zu benutzen, die Parameter verschiedener Materialeigenschaften zu ändern. Beispielsweise können die Kröpfungssegmentlamellen unterschiedlich lang sein. Es ist auch möglich, dass die beiden Kröpfungssegmentlamellen eine unterschiedliche Biege- und/oder Torsionssteifigkeit aufweisen. Auch kann über die Länge die Materialstärke oder die Materialbeschaffenheit wechseln.

Insbesondere wird vorgeschlagen, dass die beiden Kröpfungssegmentlamellen aus unterschiedlichen Materialien bestehen. Hier lassen sich verschiedene, an sich beim Fahrzeugbau bekannte Stahlsorten und Blechstärken einsetzen. Auch Aluminium-Profile oder spezielle Metalle bzw. Legierungen können verwendet werden. Es soll auch nicht ausgeschlossen sein, dass wenigstens eine der beiden Kröpfungssegmentlamellen aus einem hochfesten Kunststoff besteht, beispielsweise aus einem mit Carbonfasern armierten Duroplast.

Um dem Kröpfungssegment, das aus den beiden Kröpfungssegmentlamellen besteht, größere Festigkeit und Einbausicherheit zu verleihen, können die Kröpfungssegmentlamellen untereinander zusätzlich durch Schweißen oder Kleben miteinander verbunden sein.

Letztlich soll auch nicht ausgeschlossen werden, dass zusätzliche streifenartige Lamellen zwischen den Kröpfungslamellen oder an ihren Außenseiten als weitere Verstärkungselemente angebracht sind.

Vorzugsweise bildet der obere abkragende Gurtteil der einen Kröpfungssegmentlamelle auf der Höhe des anderen oberen Gurtteils der anderen Kröpfungssegmentlamelle eine gemeinsame Außenebene.

Die beiden Kröpfungssegmentlamellen können auf einem Teil ihrer Länge im Querschnitt spiegelbildlich gleich geformt sein, so dass dort die benachbarten beiden Gurtteile einen geteilten Gurt mit einer gemeinsamen Außenebene bilden.

Um einen Bodenbelag passgenau einlegen zu können, wird vorgeschlagen, dass die Außenebene der geteilten Gurte auf der Höhe der Oberfläche des auf dem Achssegment liegenden Bodenbelags liegt.

Eine Verbindung zwischen den Kröpfungssegmentlamellen und dem Achssegment kann über verschiede Bolzenfügungen durchgeführt werden. Vorzugsweise werden hier Rändelbolzen mit Muttern verwendet. Aber auch Vollnieten oder Passbolzen mit Muttern sowie andere entsprechende Fügeelemente sollen nicht ausgeschlossen sein. Der Fachmann versteht unter Rändelbolzen solche Bolzen, bei denen neben einem Gewinde, das auf einem Teil des Schraubschaftes angeordnet ist, noch ein Rändelteil vorhanden ist, der sich in eine Bohrung unter Formänderung der Innenperipherie des Bohrungsmaterials fest einpresst.

Vorzugsweise wird eine der Kröpfungssegmentlamellen so ausgestaltet, dass eine Überlappungszone zum Achssegment hin vorhanden ist, die vom unteren und/oder oberen Gurtteil freigelegt ist.

Bei der Kröpfungssegmentlamelle, die im Bereich der Überleitungszone vom unteren Quersteg freigelegt ist, kann der untere belassene Quersteg oberhalb in Abstand und ohne Verbindung zum Obergurt des Achssegmentes verlaufen.

Insbesondere bei Verwendung eines Achssegmentes des Langträgers, der im Querschnitt ein U- oder Z-Profil aufweist, können zusätzlich die zum Chassis gehörenden Teile über die Bolzenverbindung mit dem Langträger verbunden sein. Gedacht ist hierbei an Stützwindenträger und/oder einen Querträger, die an dieser Stelle über Schraubverbindungen getragen werden können.

Die Figuren zeigen Ausführungsbeispiele der Erfindung. Es zeigen im Einzelnen:
- Fig. 1: eine schematisierte Seitenansicht eines Chassis eines Sattelaufliegers;
- Fig. 2: eine Ausführungsform eines Kröpfungssegmentes aus zwei Kröpfungssegmentlamellen Teildarstellung;
- Fig. 2a: einen Schnitt durch das Kröpfungssegment gemäß Fig. 2 in Höhe der Schnittlinie a - a;
- Fig. 3: einen Verbindungsbereich von Kröpfungssegment mit Kröpfungssegmentlamellen und dem hinteren Achssegment;
- Fig. 4: einen Verbindungsbereich in anderer Ausführungsform;
- Fig. 5a: einen Schnitt durch den Verbindungsbereich gemäß Fig. 5b mit einer Darstellung der Auflage eines Bodenbelags;
- Fig. 5b: eine Seitenansicht durch einen Verbindungsbereich einer anderen Ausführungsform;
- Fig. 6a bis 6d: Darstellungen verschiedener Möglichkeiten der Verwendung von Kröpfungssegmenten und Achsbereichen bei gleicher Kröpfungskontur und verschiedenen Höhen von Kröpfungssegment und Achssegment.

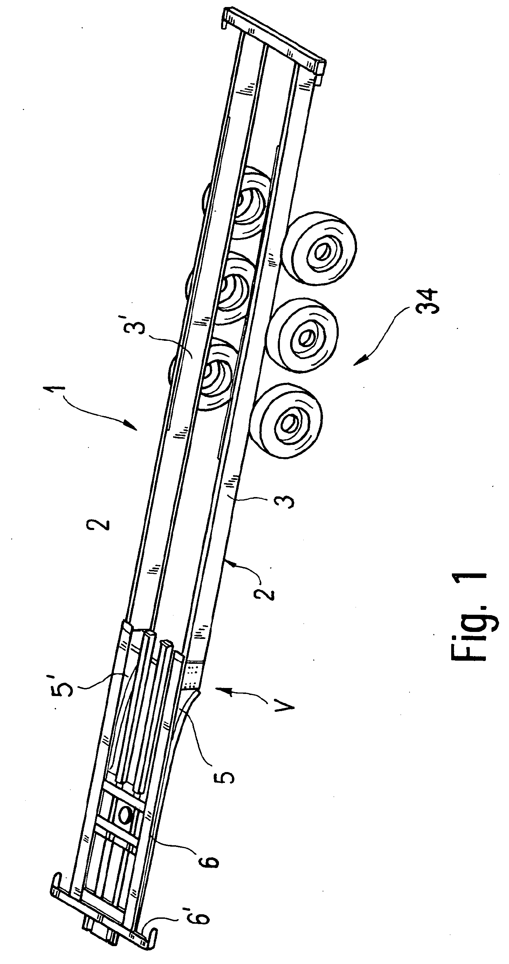

Anhand der Fig. 1 wird ein Anwendungs- und Ausführungsbeispiel der Erfindung erläutert. Dargestellt ist ein Teil eines Chassis 1 eines Sattelaufliegers, bei dem der Fahrgestell-Rahmen zwei Langträger 2 und 2' auf je einer Seite umfasst. Jeder der beiden Langträger 2 und 2' besteht über seine Länge aus zwei Teilen, nämlich aus dem hinteren Achssegment 3 bzw. 3' des Langträgers und dem vorderen Kröpfungssegment 5 bzw. 5' mit dem Sattelkupplungs-Bereich 6 mit einer vorderen Versteifungsstrebe 6'. Die Achssegmente 3 und 3' tragen das Fahrgestell 34. die beiden Kröpfungssegmente 5 und 5' reichen demnach von den Verbindungsbereichen V mit den Langträgern 3,3' bis zur Spitze des Fahrzeugs.

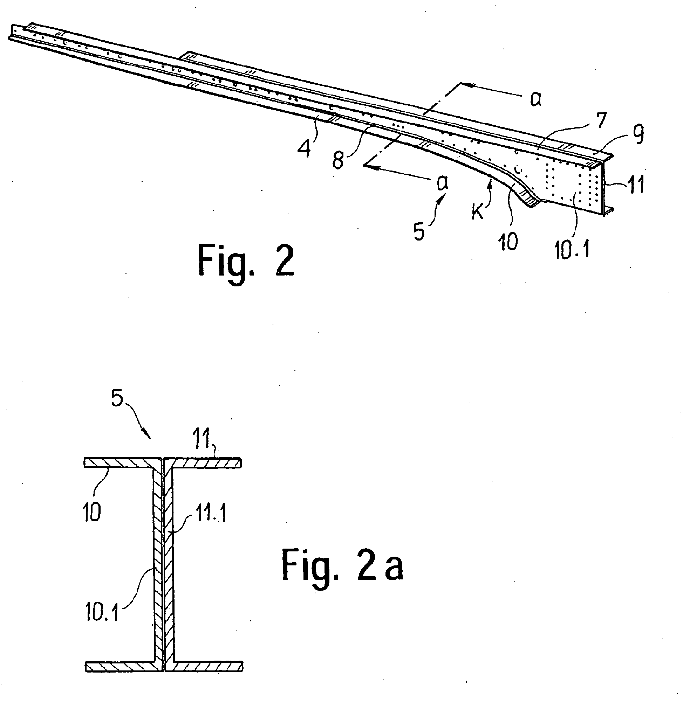

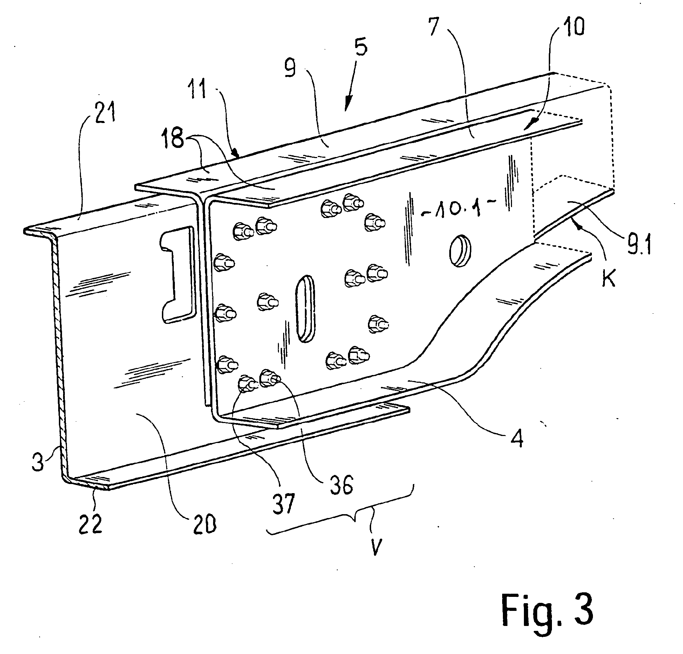

Ein schematisiertes Ausführungsbeispiel eines Teils des vorderen Kröpfungssegmentes 5 und des Verbindungsbereiches V zeigen die Fig. 2, 2a und 3. Aus Fig. 2 geht hervor, dass das Kröpfungssegment 5 zu seinem vorderen Ende hin gekröpft ist, das heißt, sich in Fahrtrichtung bis zur Spitze des Fahrzeugs im Querschnitt verjüngt.

Das Kröpfungssegment 5 umfasst zwei langgestreckte Kröpfungssegmentlamellen 10 und 11, die durch Blechumformung entsprechender Zuschnitte hergestellt sind. Beide Kröpfungssegmentlamellen 10, 11 weisen jeweils einen vertikalen Trägerteilsteg 10.1 bzw. 11.1 auf. Die Kröpfungssegmentlamelle 10 trägt an ihrem oberen und unteren Ende je ein abkragendes Gurtteil 7 und 4, wobei sich eine U-Form ergibt. Die Unterkante 8 der Trägerteilstege 10.1, 11.1 folgt einer Kröpfungskontur K.

Die zweite Kröpfungssegmentlamelle 11 ist in weiten Teilen spiegelbildlich gleich der ersten Kröpfungssegmentlamelle 10. Der Trägerteilsteg 11.1 ist oben und unten mit symmetrisch zu den Gurtteilen 7 und 4 abkragenden Gurtteilen 9, 9' versehen, wobei der untere Gurtteil 9.1 im ungekröpften Bereich ausgeschnitten ist. In der Figur 1 ist aus darstellerischen Gründen die Mittellinie zwischen den beiden Kröpfungssegmentlamellen 10 und 11 nicht dargestellt.

Wie gestrichelt in Fig. 3 dargestellt, verläuft die Kröpfungssegmentlamelle 11 damit im gekröpften Bereich im Wesentlichen spiegelbildlich zu der Kröpfungssegmentlamelle 10 und besitzt ebenfalls die Kröpfungskontur K.

Die beiden oberen Gurtteile 7 und 9 ergeben somit einen geteilten Gurt 18 mit einer gemeinsamen Außenebene. Die Steifigkeit des aus den Kröpfungssegmentlamellen 10 und 11 hergestellten Kröpfungssegments 5 ist genau so groß wie der eines einstückigen Kröpfungssegmentes. Die beiden Kröpfungssegmentlamellen 10 und 11 können jedoch zusätzlich auch noch durch Klebe- oder Schweißverbindungen untereinander fest verbunden werden, um die Gesamtsteifigkeit schon vor dem Einbau zu erhöhen.

Die beiden Kröpfungssegmentlamellen 10 und 11 können, wie dargestellt, im Wesentlichen spiegelbildlich gleich sein und aus dem gleichen, etwa 5 bis 10 mm dicken Stahlblech hergestellt sein. Dadurch, dass das Kröpfungssegment 5 in zwei Kröpfungssegmentlamellen 10 und 11 geteilt ist, lassen sich mit Vorteil verschiedene Parameter, die für die Festigkeit und Steifigkeit maßgebend sind, in weiten Bereichen verändern. Beispielsweise können die Kröpfungssegmentlamellen verschieden lang sein, unterschiedliche Biege- und/oder Torsionssteifigkeiten aufweisen, aus verschiedenen Materialien bestehen und auch verschiedene Steg- und Gurtformen aufweisen.

Im nicht gekröpften Bereich der Kröpfungssegmentlamellen 10, 11, wie in Fig. 3 dargestellt, liegt der Verbindungsbereich V. Hier überlappen sich die Enden der Kröpfungssegmentlamellen 10, 11 und das Ende des hinteren Achssegmentes 3.

Das Achssegment 3 (ebenso 3') ist aus Stahlblech mit einer Dicke von etwa 10 mm geformt, wobei sich ein Z-Profil ergibt. Das Z-Profil weist einen vertikalen Tragsteg 20 und einen oberen Gurt 21 und einen unteren Gurt 22 auf. Beide Gurte 21 oder 22 haben keine Verbindung zu den im Verbindungsbereich planparallel verlaufenden Gurtteil 9 der Kröpfungssegmentlamelle 11 bzw. dem Gurtteil 4 der Kröpfungssegmentlamelle 10.

Die Trägerteilstege 10.1 und 11.1 schmiegen sich eng an den Tragsteg 20 des Achssegmentes 3. Sie sind im Ausführungsbeispiel gemäß Figur 3 über fünfzehn Rändelbolzen 36 mit festsitzenden Muttern 37 gefügt. Unter Rändelbolzen versteht der Fachmann Schraubbolzen, die ein der Mutter entsprechendes Gewinde und einen Rändelbereich zwischen Gewinde und Bolzenkopf besitzen. Die Rändelbereiche drücken sich unter Materialverformung in eine Bohrungsperipherie ein. Dadurch wird eine hohe Festigkeit und Verwindung erreicht. Die Rändelbolzen 36 sorgen mit ihrer großen Scherfestigkeit für eine einwandfreie, schubfeste Verbindung von Achssegment 3 zu den entsprechenden Kröpfungssegmentlamellen 10, 11.

Es ist auch erkennbar, dass der untere Gurtteil 9.1 der innen liegenden Kröpfungssegmentlamelle 11 im Verbindungsbereich teilweise ausgeschnitten ist, da sonst eine Anlage an den vertikalen Tragsteg 20 nicht möglich wäre.

Damit verläuft bei der Kröpfungssegmentlamelle 11, die im Verbindungsbereich im unteren Gurtteil 9.1 ausgeschnitten ist, der obere belassene Gurtteil 9 oberhalb in Abstand und ohne Verbindung zum oberen Gurt 21 des Achssegmentes 3.

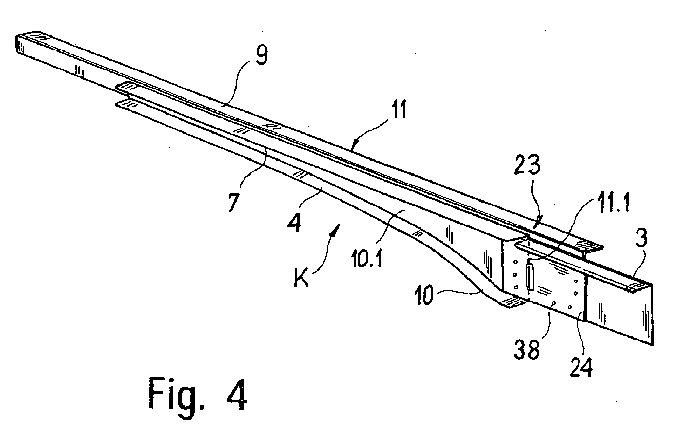

Anhand der Figur 4 wird eine andere Ausführungsform der Verbindung zwischen zwei Kröpfungssegmentlamellen 10 und 11 und dem Achssegment 3 beschrieben. Von den Trägerteilstegen 10.1 und 11.1 der Kröpfungssegmentlamellen 10.11 ragen Gurtteile 4, 7 und 9 ab. Beide Kröpfungssegmentlamellen 10 und 11 weisen an ihrer Unterkante 8 die Kröpfungskontur K auf. An der linken Seite der Figur 4 sind die Kröpfungssegmentlamellen abgebrochen gezeichnet; in Wirklichkeit verlaufen sie bis zur Spitze des Fahrzeugs.

Im Verbindungsbereich V ist der vertikale Trägerteilsteg 11.1 der Kröpfungssegmentlamelle 11 und der vertikale Tragsteg 20 des hinteren Achssegmentes 3 durch eine Stoßfuge 23 getrennt. Über die Stoßfuge 23 reicht eine Verbindungslasche 24. Über Bolzenfügungen mit Vollniete 38 ist die Verbindungslasche 24 sowohl mit beiden Kröpfungssegmentlamellen 10, 11 als auch mit dem Achssegment 3 verbunden. Eine der beiden Kröpfungssegmentlamellen (hier 10) überlappt dabei zusätzlich das Achssegment.

Es ist darauf hinzuweisen, dass bei allen beschriebenen Ausführungsbeispielen eine Verbindung nur über die Stege der Segmente bzw. Kröpfungssegmentlamellen, nicht aber über die Gurte erfolgt.

In einer weiteren, nicht dargestellten Verbindungsart können beide Kröpfungssegmentlamellen 10, 11 so bemessen und angeordnet sein, dass sie das Achssegment 3 nicht überlappen, sondern ausschließlich über eine oder mehrere Verbindungslaschen im Bereich der vertikalen Tragstege über eine Stoßfuge hinweg verbunden sind. Eine Verbindung über die Gurte der Segmente ist auch hierbei nicht vorgesehen.

Die beiden Kröpfungssegmentlamellen 10, 11 können allerdings vor dem Einbau untereinander flächig oder streifenförmig verbunden werden, beispielsweise über Verklebungen oder Verschweißungen. Die Kröpfungssegmentlamellen bezifferte die Kröpfungssegmente reichen aus Stabilitätsgründen vorzugsweise über die gesamte vordere Länge bis zum Verbindungsbereich V. Es soll konstruktiv aber nicht ausgeschlossen werden, dass sie über die Länge geteilt sind.

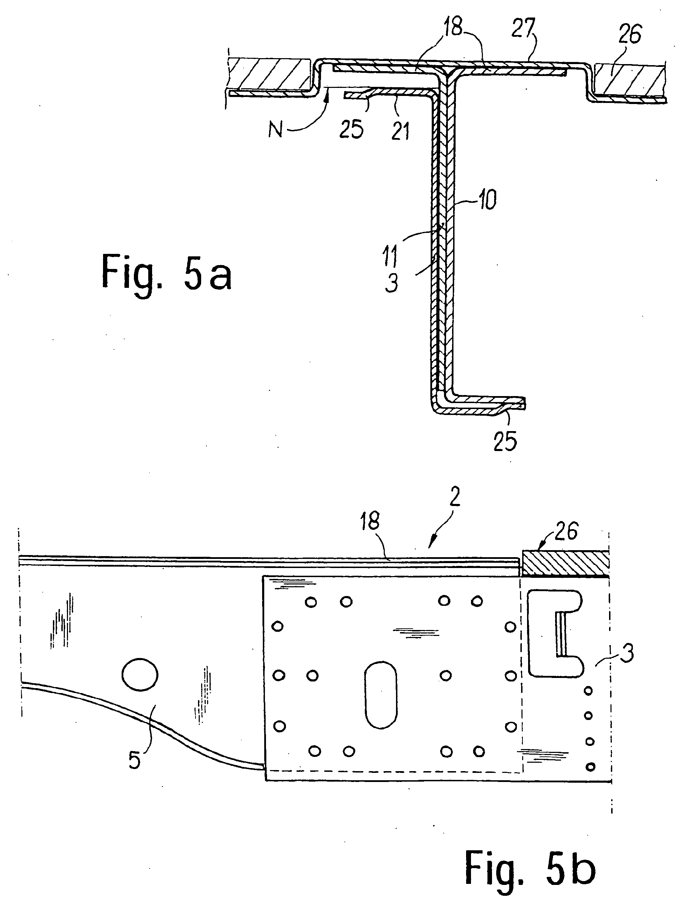

Die Figuren 5a und 5b zeigen Ausführungsbeispiele, bei denen zusätzlich zum Verbindungsbereich Teile eines Fahrzeugbodens 26 dargestellt sind. Das Niveau N der Bodenbelagsunterseite wird durch die Oberseite des oberen Gurtes 21 des Achssegmentes 3 aufgenommen, das im hinteren Teil des Längsträgers 2 den Bodenbelag allein trägt.

Im vorderen Bereich übernimmt ein doppelt gewinkeltes Tragblech 27, das über den geteilten Gurt 18 reicht und auf diesem aufliegt und dort durch Verschraubungen (nicht dargestellt) befestigt ist, mit seitlich überkragenden Teilen die Auflage des Bodenbelags. Damit ergibt sich eine Auflage auf dem Niveau N, wobei streifenförmig oberhalb der Kröpfungssegmentlamellen 10, 11 ein metallabgedeckter Streifen verbleibt.

Figur 5a zeigt außerdem, dass das Z-Profil des Achssegmentes noch durch Z-förmig gebogene Bereiche 25 versteift sein kann.

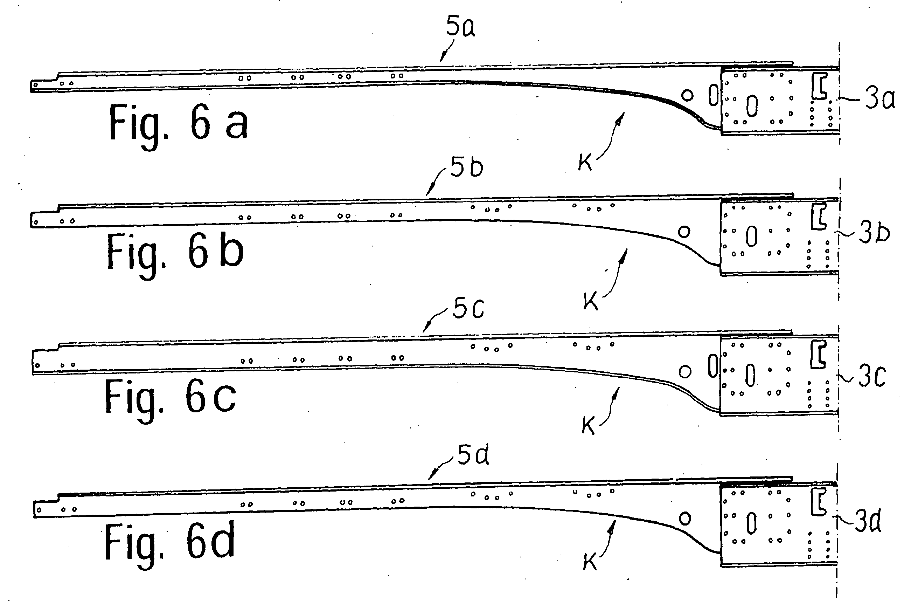

In den Figuren 6a bis 6d sind verschiedene Ausgestaltungen der Langträger-Konfiguration dargestellt, die im Bereich des Kröpfungssegmentes mit verschiedenen Profilhöhen von Langträger-Achssegmenten 3a und 3b sowie mit verschiedenen Höhen von Kröpfungssegmenten 5 ausgestaltet sind. Die verschiedenen Höhen von Kröpfungssegmenten sind zusätzlich durch unterschiedliche Gestaltungen der Kröpfungssegmentlamellen 10, 11 weithin variierbar. Hierbei ist für alle Ausführungsbeispiele 6a bis 6d jeweils dieselbe Kröpfungskontur K gewählt worden. Wie bereits angedeutet, ergibt sich eine große Mannigfaltigkeit von verschiedenen Systemen durch Wahl an sich relativ geringer Komponenten, gebildet aus Langträger-Achssegment 3 und Kröpfungssegmentlamellen 10, 11.

Von besonderem Vorteil ist weiterhin, dass die Bolzenfügung im Verbindungsbereich sich zur Anbringung weiterer Elemente eignet, beispielsweise zur Befestigung eines Stützwindenträgers oder eines Querträgers (hier nicht dargestellt).

## Patentansprüche

1. Aus wenigstens zwei Segmenten, nämlich vorderem Kröpfungssegment (5,5') und hinterem Achssegment (3,3'), bestehender Langträger (2,2') für das Chassis eines Sattelaufliegers, bei dem das Kröpfungssegment (5,5'), das an seiner Unterkante eine Kröpfungskontur (K) aufweist, die Sattelkupplung trägt, und das rückwärtige Achssegment (3,3') die Basis für die Hinterachsanordnung bildet, wobei die Segmente (5,5'; 3,3') durch Blechumformung in Form von Trägern hergestellt sind, die aus einem vertikalen Steg und wenigstens einem am Ende des jeweiligen Stegs kragenden Gurt bestehen, und in einem Verbindungsbereich (V) miteinander verbunden sind
**dadurch gekennzeichnet, dass**
- das Kröpfungssegment (5,5') zwei Kröpfungssegmentlamellen (10,11) umfasst, die jeweils einen Trägerteilsteg (10.1;11.1) und wenigstens je einen von jedem der Trägerteilstege (10.1; 11.1) abkragenden Gurtteil aufweisen,
- dass wenigstens eine der Kröpfungssegmentlamellen (10,11) an ihrer Unterkante die Kröpfungskontur (K) aufweist,
- und dass im Verbindungsbereich (V) ein Überlappungsbereich in Bezug auf die vertikalen Trägerteilstege (10.1; 11.1) der Kröpfungssegmentlamellen (10,11) und des vertikalen Tragsteges (20) des hinteren Achssegmentes (3) gebildet ist, in denen die Trägerteilstege (10.1, 11.1) aneinander liegen und über Bolzenfügungen miteinander verbunden sind.

2. Aus wenigstens zwei Segmenten, nämlich vorderem Kröpfungssegment (5) und hinterem Achssegment (3), bestehender Langträger für das Chassis eines Sattelaufliegers, bei dem das Kröpfungssegment, das an seiner Unterkante eine Kröpfungskontur (K) aufweist, die Sattelkupplung trägt, und das rückwärtige Achssegment die Basis für die Hinterachsanordnung bildet, wobei die Segmente (5; 3) durch Blechumformung in Form von Trägern hergestellt sind, die aus einem vertikalen Steg und wenigstens einem am Ende des jeweiligen Stegs kragenden Gurt bestehen, und in einem Verbindungsbereich (V) miteinander verbunden sind,
**dadurch gekennzeichnet, dass**
- das Kröpfungssegment (5) zwei Kröpfungssegmentlamellen (10,11) umfasst, die jeweils einen Trägerteilsteg (10.1;11.1) und wenigstens je einen von jedem der Trägerteilstege (10.1; 11.1) abkragenden Gurtteil aufweisen,
- dass wenigstens eine der Kröpfungssegmentlamellen (10,11) an ihrer Unterkante (8) die Kröpfungskontur (K) aufweist,
- dass im Verbindungsbereich (V) der vertikale Trägerteilsteg wenigstens einer der Kröpfungssegmentlamellen (11) und der Tragsteg des hinteren Achssegmentes durch eine Stoßfuge (23) getrennt sind,
- dass eine Verbindungslasche (24) über die Stoßfuge (23) reicht,
- und dass über Bolzenfügungen die Verbindungslasche (24) sowohl mit wenigstens einem der Trägerteilstege der Kröpfungssegmentlamellen als auch mit dem Tragsteg (20) des Achssegmentes verbunden ist.

3. Langträger nach Anspruch 1, **dadurch gekennzeichnet, dass** die durch Bolzenfügung hergestellte Verbindung zwischen den vertikalen Trägerteilstegen der Kröpfungssegmentlamellen (10,11) und des Tragsteges (20) des hinteren Achssegmentes durch eine Verbindungslasche (24) verstärkt ist.

4. Langträger nach einem der vorhergehenden Ansprüche, **dadurch gekennzeichnet, dass** beide Kröpfungssegmentlamellen (10,11) an ihrer Unterkante die gleiche Kröpfungskontur (K) aufweisen.

5. Langträger nach einem der vorhergehenden Ansprüche, **dadurch gekennzeichnet, dass** die beiden Kröpfungssegmentlamellen (10,11) unterschiedlich lang sind.

6. Langträger nach einem der vorhergehenden Ansprüche, **dadurch gekennzeichnet, dass** die beiden Kröpfungssegmentlamellen (10,11) eine unterschiedliche Biege- und/oder Torsionssteifigkeit aufweisen.

7. Langträger nach einem der vorhergehenden Ansprüche, **dadurch gekennzeichnet, dass** wenigstens eine der beiden Kröpfungssegmentlamellen über ihre Länge wechselnde Materialstärken oder Materialbeschaffenheiten aufweist.

8. Langträger nach einem der vorhergehenden Ansprüche, **dadurch gekennzeichnet, dass** die beiden Kröpfungssegmentlamellen (10, 11) aus unterschiedlichen Materialien bestehen.

9. Langträger nach einem der vorhergehenden Ansprüche, **dadurch gekennzeichnet, dass** die Kröpfungssegmentlamellen (10, 11) aus Metall und/oder Kunststoff bestehen.

10. Langträger nach einem der vorhergehenden Ansprüche, **dadurch gekennzeichnet, dass** die Kröpfungssegmentlamellen (10, 11) untereinander durch Schweißen oder Kleben verbunden sind.

11. Langträger nach einem der vorhergehenden Ansprüche, **dadurch gekennzeichnet, dass** der obere abkragende Gurtteil (7) der einen Kröpfungssegmentlamelle auf der Höhe des anderen oberen Gurtteils (9) der anderen Kröpfungssegmentlamelle liegt und dass die beiden Gurtteile einen geteilten Gurt (18) mit einer gemeinsamen Außenebene bilden.

12. Langträger nach einem der vorhergehenden Ansprüche, **dadurch gekennzeichnet, dass** die beiden Kröpfungssegmentlamellen (10,11) auf einem Teil ihrer Länge im Querschnitt spiegelbildlich gleich geformt sind und dass dort die benachbarten beiden Teilgurte (7,9) einen geteilten Gurt(18) mit einer gemeinsamen Außenebene bilden.

13. Langträger nach Anspruch 11 oder 12, **dadurch gekennzeichnet, dass** die Außenebene der geteilten Gurte (18) auf der Höhe der Oberfläche des auf dem Achssegment (3) liegenden Bodenbelags liegt.

14. Langträger nach einem der vorhergehenden Ansprüche, **dadurch gekennzeichnet, dass** die Verbindung zwischen Kröpfungssegmentlamellen und Achssegment über Bolzenfügungen, ausgewählt aus den Fügelementen: Rändelbolzen (36) mit Muttern (37), Vollnieten oder Passbolzen mit Muttern, ausgeführt ist.

15. Langträger nach einem der vorhergehenden Ansprüche, **dadurch gekennzeichnet, dass** die am Achssegment anliegende Kröpfungssegmentlamelle (11) im Verbindungsbereich im unteren (9.1) und/oder oberen Gurtteil einen Ausschnitt aufweist.

16. Langträger, nach den Ansprüchen 1 und 15, **dadurch gekennzeichnet, dass** bei der Kröpfungssegmentlamelle (11), die im Verbindungsbereich im unteren Gurtteil (9.1) ausgeschnitten ist, der obere belassene Gurtteil (9) oberhalb in Abstand und ohne Verbindung zum oberen Gurt (21) des Achssegmentes (3) verläuft.

17. Langträger nach einem der vorhergehenden Ansprüche, **dadurch gekennzeichnet, dass** im Überlappungsbereich weitere, zum Chassis gehörende Teile über die Bolzenverbindung mit dem Langträger bzw. den Kröpfungssegmentlamellen verbunden sind.

18. Langträger nach Anspruch 17, **dadurch gekennzeichnet, dass** im Überlappungsbereich ein Stützwindenträger und/oder ein Querträger angebracht ist.

19. Langträger nach einem der vorhergehenden Ansprüche, **dadurch gekennzeichnet, dass** das Achssegment (3,3') des Langträgers (2,2' im Querschnitt eine Z- oder U-Form aufweist.

## Claims

1. Longitudinal girder (2, 2') consisting of at least two sections, namely front curved section (5, 5') and rear axle section (3, 3'), for the chassis of a semi-trailer, in which the curved section (5, 5'), which has on its underside a curved contour (K), supports the semi-trailer coupling, and the rear axle section (3, 3') forms the basis for the rear axle arrangement, wherein the sections (5, 5'; 3, 3') are formed by sheet metal forming into girders, which consist of a vertical web and at least one chord overhanging the end of the respective web, and are joined together in a connecting area (V), **characterised in that**
- the curved section (5, 5') comprises two curved section flanges (10, 11), which each have a support part web (10.1; 11.1) and at least one chord part projecting away from each of the support part webs (10.1; 11.1),
- at least one of the curved section flanges (10, 11) has on its underside a curved contour (K),
- and **in that** an overlapping area in relation to the vertical support part webs (10.1; 11.1) of the curved section flanges (10, 11) and the vertical support web (20) of the rear axle section (3) is formed within the connecting area (V), wherein the support part webs (10.1, 11.1) rest against one another and are connected to one another by means of bolted joints.

2. Longitudinal girder consisting of at least two sections, namely front curved section (5) and rear axle section (3), for the chassis of a semi-trailer, in which the curved section, which has on its underside a curved contour (K), supports the semi-trailer coupling, and the rear axle section forms the basis for the rear axle arrangement, wherein the sections (5; 3) are formed by sheet metal forming into girders, which consist of a vertical web and at least one chord overhanging the end of the respective web, and are joined together in a connecting area (V), **characterised in that**
- the curved section (5) comprises two curved section flanges (10, 11) which each have a support part web (10.1; 11.1) and at least one chord projecting away from each of the support part webs (10.1; 11.1),
- at least one of the curved section flanges (10, 11) has on its underside (8) the curved contour (K),
- within the connecting area (V), the vertical support part web of at least one of the curved section flanges (11) and the support web of the rear axle section are separated by an open butt joint (23),
- a connecting link (24) extends over the open butt joint (23),
- and **in that** the connecting link (24) is connected by means of bolted joints both to at least one of the support part webs of the curved section flanges as well as to the support web (20) of the axle section.

3. Longitudinal girder according to claim 1, **characterised in that** the connection produced by bolted joint between the vertical support part webs of the curved section flanges (10, 11) and the support web (20) of the rear axle section is reinforced by a connecting link (24).

4. Longitudinal girder according to any one of the preceding claims, **characterised in that** both curved section flanges (10, 11) have on their underside the same curved contour (K).

5. Longitudinal girder according to any one of the preceding claims, **characterised in that** the two curved section flanges (10, 11) are of different lengths.

6. Longitudinal girder according to any one of the preceding claims, **characterised in that** the two curved section flanges (10, 11) have a different flexural and/or torsional strength.

7. Longitudinal girder according to any one of the preceding claims, **characterised in that** at least one of the two curved section flanges has varying material thicknesses or material properties over their length.

8. Longitudinal girder according to any one of the preceding claims, **characterised in that** the two curved section flanges (10, 11) consist of different materials.

9. Longitudinal girder according to any one of the preceding claims, **characterised in that** the curved section flanges (10, 11) consist of metal and/or plastic.

10. Longitudinal girder according to any one of the preceding claims, **characterised in that** the curved section flanges (10, 11) are connected to one another by welding or bonding.

11. Longitudinal girder according to any one of the preceding claims, **characterised in that** the upper chord part (7), projecting away, of one curved section flange is level with the other upper chord part (9) of the other curved section flange and **in that** the two chord parts form a divided chord (18) with a common external plane.

12. Longitudinal girder according to any one of the preceding claims, **characterised in that** the two curved section flanges (10, 11) are formed as a mirror image of each other in the cross section over a part of their length and **in that** there the two adjacent partial chords (7, 9) form a divided chord (18) with a common external plane.

13. Longitudinal girder according to claim 11 or 12, **characterised in that** the external plane of the divided chords (18) is level with the surface of the floor covering lying on the axle section (3).

14. Longitudinal girder according to any one of the preceding claims, **characterised in that** curved section flanges and axle section are connected by means of bolted joints, selected from the following connecting elements: knurled bolts (36) with nuts (37), solid rivets or reamed bolts with nuts.

15. Longitudinal girder according to any one of the preceding claims, **characterised in that** the curved section flange (11), lying against the axle section, has within the connecting area a cut-out in the lower (9.1) and/or upper chord part.

16. Longitudinal girder, according to claims 1 and 15, **characterised in that** with respect to the curved section flange (11), which within the connecting area is cut out in the lower chord part (9.1), the remaining upper chord part (9) runs above and without connection to the upper chord (21) of the axle section (3).

17. Longitudinal girder according to any one of the preceding claims, **characterised in that** within the overlapping area, further parts belonging to the chassis are connected by means of the bolted joint to the longitudinal girder or the curved section flanges.

18. Longitudinal girder according to claim 17, **characterised in that** within the overlapping area, a winch support girder and/or a cross girder is attached.

19. Longitudinal girder according to any one of the preceding claims, **characterised in that** the axle section (3.3') of the longitudinal girder (2.2') has a Z or U shape in the cross section.

## Revendications

1. Longeron (2, 2') consistant au moins en deux sections, notamment une section en décrochement avant (5, 5') et une section de support d'essieu arrière (3, 3'), pour le châssis d'une semi-remorque, longeron dans lequel la section en décrochement (5, 5'), qui présente sur son bord inférieur un contour en décrochement (K), porte la sellette d'attelage, et la section de support d'essieu arrière (3, 3') forme la base pour l'agencement de l'essieu arrière, les sections (5, 5' ; 3, 3') étant façonnées, par estampage de tôle, en forme de supports, qui consistent en un élément vertical et au moins en une semelle en saillie à l'extrémité de chaque élément, et qui sont reliés ensemble dans une zone de liaison (V), **caractérisé en ce que**
- la section en décrochement (5, 5') comprend deux lamelles (10, 11) de la section en décrochement, qui présentent chacune un élément de support (10.1 ; 11.1) et au moins un morceau de semelle en saillie de chacun des éléments de support (10.1 ; 11.1),
- au moins l'une des lamelles (10, 11) de la section en décrochement présente, sur son bord inférieur, un contour en décrochement (K),
- et que, dans la zone de liaison (V), est formée une zone de chevauchement en ce qui concerne les éléments de support (10.1 ; 11.1) des lamelles (10, 11) de la section en décrochement et de l'élément de support vertical (20) de la section de support d'essieu arrière (3), zone de chevauchement dans laquelle les éléments de support (10.1 ; 11.1) sont placés les uns contre les autres et sont reliés ensemble par assemblages boulonnés.

2. Longeron consistant au moins en deux sections, notamment une section avant en décrochement (5) et une section arrière de support d'essieu (3), pour le châssis d'une semi-remorque, longeron dans lequel la section en décrochement, qui présente sur son bord inférieur un contour en décrochement (K), porte la sellette d'attelage, et la section de support d'essieu arrière forme la base pour l'agencement de l'essieu arrière, les sections (5 ; 3) étant façonnés, par estampage de tôle, en forme de supports, qui consistent en un élément vertical et au moins en une semelle en saillie à l'extrémité de chaque élément, et qui sont reliés ensemble dans une zone de liaison (V), **caractérisé en ce que**,
- la section en décrochement (5) comprend deux lamelles (10, 11) qui présentent chacune un élément de support (10.1 ; 11.1) et au moins un morceau de semelle en saillie de chacun des éléments de support (10.1 ; 11.1),
- au moins l'une des lamelles (10, 11) de la section en décrochement présente, sur son bord inférieur (8), un contour en décrochement (K),
- dans la zone de liaison (v), l'élément de support vertical d'au moins l'une des lamelles (11) de la section en décrochement et l'élément de support de la section de support d'essieu arrière sont séparés par un joint de séparation (23),
- une bride de raccordement (24) s'étend sur le joint de séparation (23),
- et que, par assemblages boulonnés, à bride de raccordement (24) est reliée aussi bien à au moins l'un des éléments de support des lamelles de à section en décrochement qu'à l'élément de support (20) de la section de support d'essieu.

3. Longeron selon la revendication 1, **caractérisé en ce que** la liaison réalisée par assemblage par boulonnage entre les éléments de support verticaux des lamelles (10, 11) de la section en décrochement et l'élément de support (20) de la section de support d'essieu arrière est renforcée par une bride de raccordement (24)

4. Longeron selon l'une des revendications précédentes, **caractérisé en ce que** les deux lamelles (10, 11) de la section en décrochement présentent sur leur bord inférieur le même contour en décrochement (K).

5. Longeron selon l'une des revendications précédentes, **caractérisé en ce que** les deux lamelles (10, 11) de la section en décrochement sont de langueur différente.

6. Longeron selon l'une des revendications précédentes, **caractérisé en ce que** les deux lamelles (10, 11) de la section en décrochement présentent une rigidité différente à la flexion et / ou à la torsion.

7. Longeron selon l'une des revendications précédentes, **caractérisé en ce qu'**au moins l'une des deux lamelles de la section en décrochement au moins présente, sur sa langueur, des épaisseurs ou des constitutions de matériau différentes.

8. Longeron selon l'une des revendications précédentes, **caractérisé en ce que** les lamelles (10, 11) de la section en décrochement sont en matériaux différents.

9. Longeron selon l'une des revendications précédentes, **caractérisé en ce que** les lamelles (10, 11) de la section en décrochement sont en métal et / ou en matière synthétique.

10. Longeron selon l'une des revendications précédentes, **caractérisé en ce que** les lamelles (10, 11) de la section en décrochement sont reliées entre elles par soudage ou collage.

11. Longeron selon l'une des revendications précédentes, **caractérisé en ce que** le morceau de semelle (7) supérieur en saillie de l'une des lamelles de la section en décrochement est situé à la hauteur de l'autre morceau de semelle (9) supérieure de l'autre lamelle de la section en décrochement, et que les deux morceaux de semelle forment une semelle partagée (18) avec un plan extérieur commun.

12. Longeron selon l'une des revendications précédentes, **caractérisé en ce que** les deux lamelles (10, 11) de la section en décrochement sont formées, sur une partie de leur longueur, avec une section transversale symétrique, et que les deux morceaux de semelle voisins (7, 9) forment, ici, avec un plan commun, une semelle partagée (18).

13. Longeron selon revendication 11 ou 12, **caractérisé en ce que** le plan extérieur des semelles partagées (18) est situé au niveau de la surface du revêtement posé sur la section de support d'essieu (3).

14. Longeron selon l'une des revendications précédentes, **caractérisé en ce que** la liaison entre les lamelles de la section en décrochement et la section de support d'essieu est exécutée par assemblage boulonné, choisi parmi les éléments de raccordement : boulons moletés (36) avec écrous (37), rivets ou boulons ajustés.

15. Longeron selon l'une des revendications précédentes, **caractérisé en ce que** la lamelle (11) de la section en décrochement, adjacente à la section de support d'essieu présente, dans la zone de liaison, une découpe dans le morceau inférieur (9.1) et / ou le morceau supérieur de la semelle.

16. Longeron selon les revendications 1 et 15, **caractérisé en ce que**, dans la lamelle (11) de la section en décrochement, qui est découpée dans la zone de liaison, dans le morceau de semelle inférieur (9.1), le morceau de morceau de semelle supérieur intact s'étend en haut, à distance et sans liaison au morceau de semelle supérieur (21) de la section de support d'essieu (3).

17. Longeron selon l'une des revendications précédentes, **caractérisé en ce que** sont installées dans la zone de chevauchement d'autres pièces faisant partie du châssis, lesquelles sont reliées au longeron, respectivement aux lamelles de la section en décrochement, par assemblage boulonné.

18. Longeron selon la revendication 17, **caractérisé en ce que**, dans la zone de chevauchement, un support de cric d'appui et / ou une traverse est / sont installées.

19. Longeron selon l'une des revendications précédentes, **caractérisé en ce que** la section de support d'essieu (3, 3') du longeron (2, 2') présente une section transversale en forme de Z ou de U.
